## Europäisches Patentamt
## European Patent Office
## Office européen des brevets

(19)

(11) Veröffentlichungsnummer : **0 145 900 B1**

(12) **EUROPÄISCHE PATENTSCHRIFT**

(45) Veröffentlichungstag der Patentschrift :
26.04.89

(21) Anmeldenummer : 84112796.2

(22) Anmeldetag : 24.10.84

(51) Int. Cl.⁴ : **B 23 K   1/20**, B 23 K   3/00

(54) Automatische Auftragvorrichtung für ein flüssiges oder pastöses Beschichtungsmaterial.

(30) Priorität : 16.12.83 DE 3345596

(43) Veröffentlichungstag der Anmeldung :
26.06.85 Patentblatt 85/26

(45) Bekanntmachung des Hinweises auf die Patenterteilung : 26.04.89 Patentblatt 89/17

(84) Benannte Vertragsstaaten :
AT CH LI

(56) Entgegenhaltungen :
DE—A— 2 134 195
DE—U— 1 901 928
US—A— 1 934 357
US—A— 3 741 150

(73) Patentinhaber : Preh Industrieausrüstungen GmbH
Schweinfurter Strasse 5 Postfach 1740
D-8740 Bad Neustadt/Saale (DE)

(72) Erfinder : Laukenmann, Erich, Dipl.-Ing.
Mönchsweg 30
D-8740 Bad Neustadt/Saale (DE)
Erfinder : Bardroff, Hans
Schuhmarktstrasse 12
D-8740 Bad Neustadt/Saale (DE)

EP 0 145 900 B1

**Beschreibung**

Die Erfindung geht von einer automatischen Auftragvorrichtung nach dem Oberbegriff des Anspruches 1 aus.

Ohne Substrate in der Form von Leiterplatten als Baugruppen ist ein Aufbau von Elektronik nicht mehr vorstellbar. Diese Elektronikbaugruppen müssen elektrisch angeschlossen und untereinander verbunden werden. Eine Möglichkeit, eine Verbindung herzustellen, besteht darin, lösbare elektrische Steckverbinder zu verwenden. Diese Lösung wird insbesondere dann gewählt, wenn eine leichte Austauschbarkeit gewährleistet werden soll. Hauptaufgaben eines Steckverbinders wie auch einer unlösbaren Verbindung sind sichere Kontaktgabe mit relativ niedrigerem Kontaktwiderstand, mit großer Stromtragfähigkeit und hoher Spannungsfestigkeit. Bei den Steckverbindern kann man zwischen dem direkten oder dem indirekten Steckprinzip wählen. Ein direktes Steckprinzip liegt vor, wenn eine Leiterplatte mit dafür ausgebildeten Kontaktzungen, die den Anfang oder das Ende einer Leiterbahn bilden, direkt in eine Federleiste gesteckt werden kann. Beim indirekten Steckprinzip ist ein Teil der Steckverbindung (Stift- oder Federteil) durch Löten fest mit der Leiterplatte verbunden.

Die am häufigsten angewandte Verbindungstechnik für unlösbare Verbindungen ist, insbesondere auch im Hinblick auf die Bauelemente, das Löten. Während für Muster- und Kleinserienbau die Handlötung mit dem Lötkolben zum Erfolg führt, hat man für die Serienfertigung Tauch-, Schlepp- und Wellenlötverfahren entwickelt. Das Tauch- und Schleppverfahren arbeitet mit einem ruhenden Lötbad, in welches die Leiterplatte eingebracht wird. Beim Tauchlöten wird die Leiterplatte senkrecht in das Lot eingetaucht, während sie im reinen Schleppbad bei geringer Eintauchtiefe tangential über die Lotoberfläche geführt wird. Bei Wellenlötanlagen wird das Lot über das Niveau im Lotvorratsbehälter bis zur Unterseite der Leiterplatte angehoben. Diese Verfahren eignen sich besonders zum Einlöten von Bauelementen. Vielfach sollen aber auch Drähte an die Leiterplatte unlösbar angelötet werden. Man kann hierzu mit Lötpasten arbeiten. Es ist bekannt, diese Lötpasten mittels Siebdruck, Tampondruck oder mit Dosiergeräten aufzubringen. Zum besseren Lötfluß und zur Vermeidung der Bildung einer Oxidschicht ist es zweckmäßig, zusätzlich zur Lötpaste etwas Flußmittel hinzuzufügen. Diese Flußmittel können gasförmig, flüssig als Lötwasser, pastenförmig als Flußmittelpaste oder pulverförmig als Lötpulver zur Anwendung gelangen.

In dem DE-Buch « Löten - kurz und bündig » von Walter Wuich, erschienen 1972 im Vogel-Verlag, Würzburg ist auf Seite 110 und im Bild 4.4 auf Seite 111 eine Flußmittelspritzanlage beschrieben und dargestellt. Es handelt sich um eine automatische Vorrichtung zum Aufbringen eines pastösen Flußmittels auf ein Werkstück. In einem Druckgefäß mit einem Rührwerk befindet sich das Flußmittel. Dieses wird mittels Preßluft in eine automatische Spritzpistole befördert. Die Spritzpistole selbst wird über Steuerluft betätigt. Um die Anlage zu betreiben, muß Preßluft mit etwa 3,5 atü vorhanden sein.

Eine automatische Auftragvorrichtung für Flußmittel beschreibt die DE-U-19 01 928. Eine rotierende Walze benetzt ihre Mantelfläche mit Flußmittel durch permanentes Eintauchen in den Vorratsbehälter. Eine gleichfalls rotierende Bürste übernimmt das Flußmittel stetig von der Walze und überträgt es in überstreichender Weise auf längs vorbeigeführte Substrate.

Aufgabe der vorliegenden Erfindung ist es, eine automatische Auftragvorrichtung für Flußmittel zu schaffen, bei der das Flußmittel nur an ganz bestimmten gewünschten Stellen in einer ganz bestimmten Menge auf eine mit einer Lötpaste versehene Leiterplatte aufbringbar ist.

Diese Aufgabe wird erfindungsgemäß durch die im Kennzeichnungsteil des Anspruches 1 angegebenen Merkmale gelöst.

Vorteilhafte Ausgestaltungen ergeben sich aus den Unteransprüchen.

Der Vorteil der Erfindung liegt darin, daß genau die Teilmenge des Flußmittels aus dem Vorratsbehälter entnommen wird, die erforderlich ist. Dies wird bewerkstelligt durch entsprechende Ausgestaltung des Hebegliedes. Hierzu ist eine Abstimmung zwischen Viskosität des Flußmittels und Maschenweite der Gaze notwendig. Die Viskosität ist bekannterweise von der Temperatur abhängig. Da keine zusätzliche Heizeinrichtung verwendet wird, erfolgt der Vorgang der Flußmittelauftragung bei normaler Raumtemperatur. Mit Hilfe der Formgebung der Stempeleinrichtung kann genau festgelegt werden, wo auf der Leiterplatte das Flußmittel aufgebracht wird.

Die Erfindung wird nachfolgend für ein Ausführungsbeispiel anhand der Zeichnungen näher beschrieben.

Von den Figuren zeigt

Figur 1 in perspektivischer Darstellung eine Auftragvorrichtung,

Figur 2 eine Seitenansicht der Auftragvorrichtung, teilweise im Schnitt, und eine gesondert dargestellte Einzelheit,

Figur 3 ein Schaltbild einer elektro-pneumatischen Steuerung für die Auftragvorrichtung,

Figur 4 ein Funktions- und Zeitdiagramm für die Steuerung der einzelnen Zylinder.

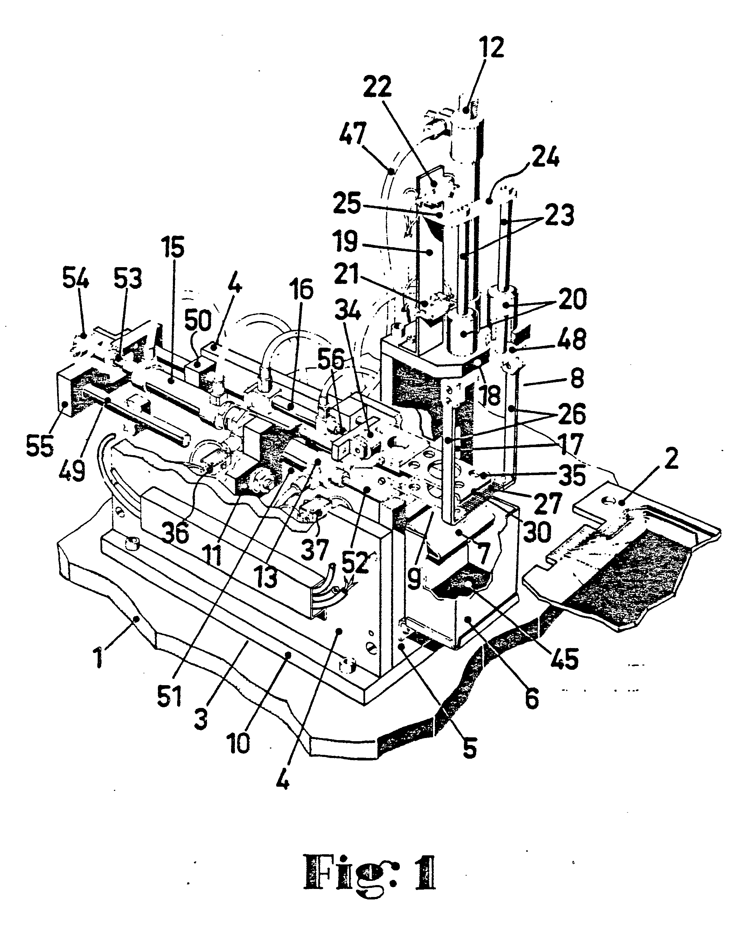

Die in Figur 1 in perspektivischer Darstellung gezeigte automatische Auftragvorrichtung ist auf einem mit 1 bezeichneten Gestelltisch angeordnet.

Rechts in Figur 1 ist die Leiterplatte 2 für sich allein dargestellt. Sie kann eine beliebige Größe und Form haben. Die Halterung der Leiterplatte wurde nicht dargestellt, da sie für die Erfindung keine Bedeutung hat. Die Leiterbahnen der Leiterplatte 2 sind bis zum Rand geführt, wo sie in Kontaktstellen enden. Bei diesem Ausführungsbeispiel soll auf die Leiterplatte beidseitig Flußmittel aufgebracht werden. Die nebeneinander liegenden Kontaktstellen befinden sich auf einer Seite der Leiterplatte 2, während die gegenüberliegende Randfläche auf der anderen Seite durchgehend als Masseanschluß gedacht ist. Die Kontaktstellen und der Masseanschluß sind zuvor im Siebdruckverfahren hergestellt und zwar mit einer Lötpaste ohne Flußmittel. Nach Herstellung der Leiterplatte 2 wird diese fertigungsbedingt unter Umständen für längere Zeit zwischengelagert. Um nun ein Bandkabel an die Leiterplatte anlöten zu können, müssen die Kontaktstellen und der Masseanschluß mit einem Flußmittel benetzt werden zur Entfernung der sich gebildeten Oxidschicht. Für diesen Zweck ist die hier beschriebene Auftragsvorrichtung vorgesehen.

An dem Gestelltisch 1 ist ein Tragkörper 3 befestigt, der einen im Schnitt U-förmigen Querschnitt aufweist. Seitlich zu der auf dem Gestelltisch 1 aufliegenden Grundplatte 10 ragen zwei Seitenwände 4 empor. Auf einer Seite, nämlich der Vorderseite, sind die Seitenwände 4 durch eine querstehende Halteplatte 5 miteinander verbunden. Auf der Rückseite und auf der Oberseite ist der Tragkörper 3 offen. Die Halteplatte 5 ist wesentlich höher als die Seitenwände. Im Bereich der Seitenwände ist an der Halteplatte 5 auf der Vorderseite ein nach außen ragender Vorratsbehälter 6 befestigt. In diesem Vorratsbehälter befindet sich das Flußmittel 45. Auf der Oberseite ist der Vorratsbehälter 6 durch eine Abdeckplatte 7 zumindest teilweise abgedeckt. Es ist nur ein Schlitz 46 offen, durch den das Hebeglied 8 eintauch- und herausfahrbar ist. Diese Abdeckplatte ist deshalb vorgesehen, um ein zu schnelles Austrocknen des Flußmittels zu verhindern. Das Flußmittel sollte stark benetzende Eigenschaften haben. Darüber hinaus muß das Flußmittel in der Lage sein, die Oxidhaut chemisch zu reduzieren und wegzuschaffen. Gleichfalls muß die Neubildung von Oxidschichten verhindert werden.

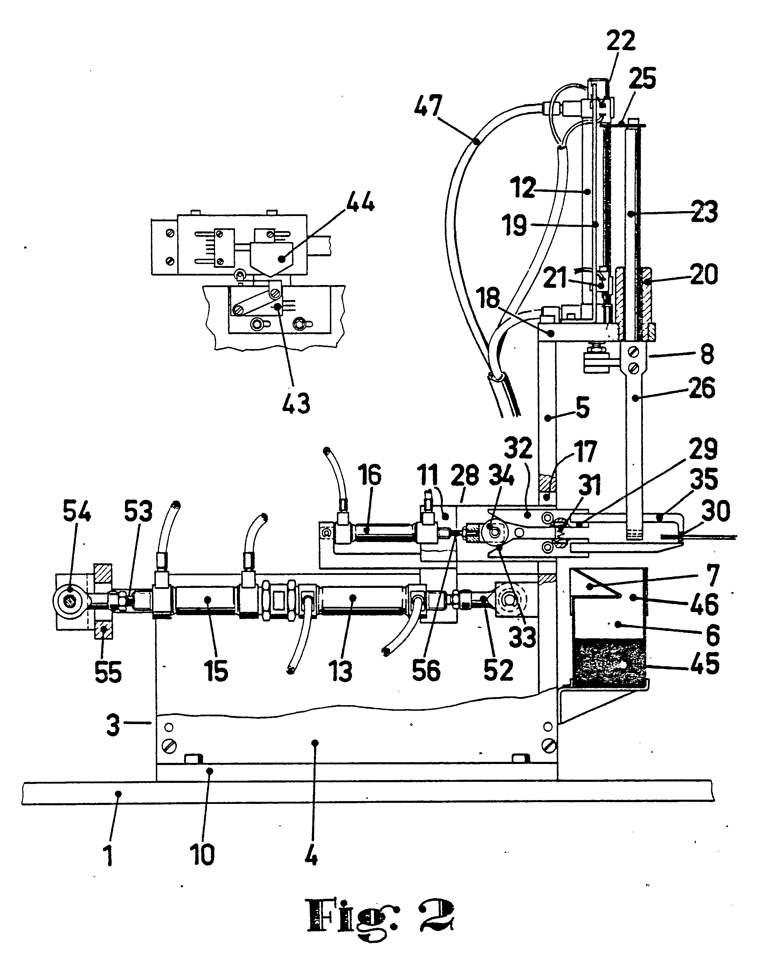

Wie schon beschrieben, ist die schmale und hohe Halteplatte an einem Ende der Grundplatte 10 und an den beiden Seitenwänden 4 befestigt. Das andere, freie Ende der Halteplatte 5 trägt eine Tragplatte 18, die senkrecht zur Halteplatte angeordnet ist. Auf dieser Tragplatte 18 ist turmartig ein pneumatisch angetriebener Zylinder A mit dem Bezugszeichen 12 befestigt. Seine am Boden- und am Deckelanschluß angebrachten Druckluftleitungen 47 sind in Figur 1 und Figur 2 der besseren Übersicht wegen nur auszugsweise dargestellt.

Die Kolbenstange des Zylinders A ist mit einem Hebeglied 8 starr verbunden. Dieses Hebeglied 8 besteht aus einem Bügel 48, an dem zwei Führungsstangen 23 befestigt sind. Mit diesen Führungsstangen 23 ist das Hebeglied in Führungsbuchsen 20 verschiebbar geführt. Die Führungsbuchsen selbst sind, wie aus Figur 1 entnommen werden kann, auf der Oberseite der Tragplatte 18 angeordnet. An dem dem Bügel 48 gegenüberliegenden Ende der Führungsstangen 23 ist endseitig eine querliegende Leiste 24 angebracht. Auf einer Seite der Leiste 24 ist ein mit der Leiste einstückig zusammenhängender Ansatz 25 ausgebildet, der im rechten Winkel zu der Leiste steht. Mit Hilfe dieses Ansatzes werden zwei Schalter 21 bzw. 22 betätigt. Diese beiden Schalter arbeiten mit einer Steuerschaltung 42 zusammen. Beide Schalter sind in unterschiedlicher Höhe an einem Winkelstück 19 befestigt, das seinerseits senkrecht an der Tragplatte 18 angebracht ist.

Am Bügel 48 sind, wie aus Figur 1 hervorgeht, an den beiden Außenseiten je ein Haltearm 26 angebracht. Zwischen den beiden freien Enden der Haltearme ist eine Gaze 27 eingespannt derart, daß die Gazeebene parallel zur Oberfläche des Flußmittels 45 liegt. Die Maschenweite der Gaze sollte auf die Viskosität des aufzutragenden Flußmittels abgestimmt sein. Die Größe der Gaze sollte in etwa der Fläche des das Flußmittel übernehmenden Stempels entsprechen. Taucht die Gaze in das Flußmittel ein, so wird der Zwischenraum zwischen den Maschen durch das Flußmittel gefüllt.

Zieht man die Gaze heraus, so wird ein Teil des Flußmittels ablaufen, ein anderer Teil hingegen bleibt aufgrund der Haftung an den Maschen und in den Zwischenräumen hängen. Maschenweite und Viskosität müssen deshalb genau aufeinander abgestimmt sein, damit die gewünschte Menge Flußmittel aus dem Vorratsbehälter entnommen wird.

Zwischen den beiden Seitenwänden 4 des Tragkörpers ist ein Schlitten 11 verschiebbar angeordnet. Geführt wird der Schlitten 11 durch zwei Führungssäulen 49, mit denen der Schlitten an einem Stirnende verbunden ist. Die Führungssäulen selbst sind in jeweils zwei Lagerböcken 50 verschiebbar gelagert, die auf der Innenseite der Seitenwände 4 in der oberen Hälfte angeordnet sind.

Im Schlitten 11 ist etwa in seiner Mitte ein Einschnitt 51 ausgespart, durch den ein pneumatisch gesteuerter Zylinder B mit dem Bezugszeichen 13 ragt. Die Kolbenstange 52 des Zylinders 13 ist an dem freien Ende auf der Innenseite der Halteplatte 5 mittels eines Gelenkkopfes an der Halteplatte 5 befestigt. Das Gehäuse des Zylinders 13 ist mit dem Gehäuse eines weiteren Zylinders C mit dem Bezugszeichen 15 starr verbunden. Die Kolbenstange 53 des Zylinders 15 ist mit Hilfe eines Gelenkkopfes 54 an einem traversenartigen Brückenelement 55 angebracht.

Der Hub der Zylinder 13, 15 bzw. der Kolbenstangen 52, 53 wird durch insgesamt drei Schalter bestimmt. Zwei Schalter 36 und 37 befinden sich auf einer Seite an der, wie aus Figur 1 entnehmbar ist, vorderen Seitenwand. Mit Hilfe dieser beiden Schalter werden die beiden Endstellungen der Kolbenstangen 52 und 53 festgelegt. Es gibt jedoch noch eine Zwischenstellung, bei der nur die Kolbenstange 53 ausgefahren ist. Dies ist die Stellung der Übergabe des Flußmittels an die Stempeleinrichtung. Diese Stellung wird durch den Schalter 43 bestimmt, der sich an der rückwärtigen Seitenwand bezüglich der Lage zwi-

schen den Schaltern 36 und 37 befindet. Da dieser Schalter 43, der mit einem Schaltstück 44 des Schlittens 11 zusammenwirkt, in den Figuren 1 und 2 nicht sichtbar wäre, ist er in Figur 2 links oben als Einzelheit nochmals dargestellt.

Zusammen mit dem Schlitten 11 wird die Stempeleinrichtung 9 verschoben. Diese besteht unter anderem aus einem pneumatisch gesteuerten Zylinder D mit dem Bezugszeichen 16. Bei ihm ebenso wie bei den anderen beiden Zylindern 13 und 15 sind die Druckluftzuleitungen der besseren Übersicht wegen nur angedeutet. Ein wesentlicher Bestandteil der Stempeleinrichtung 9 stellen zwei zweiarmige Wippen 28 dar, die gegensinnig um ein Drehlager winkelbewegbar gelagert sind. An dem ersten Arm 29 ist über einen Träger 35 der eigentliche Stempel 30 befestigt. Der zweite Arm 32 besitzt zum Ende hin geneigte Einlaufschrägen 33. Zwischen den beiden ersten Armen 29 ist, wie Figur 2 zeigt, ein Federglied 31 angeordnet, das danach trachtet, die beiden ersten Arme auseinanderzudrücken. Am frein Ende der Kolbenstange 56 des Zylinders 16 ist eine Rolle 34 befestigt, die mit den Einlaufschrägen 33 im Sinne einer Spreizung der Wippenarme zusammenarbeitet. Die genaue Wirkungsweise wird später näher erläutert werden.

Für die Stempeleinrichtung 9 ist in der Halteplatte 5 eine Ausnehmung 17 ausgespart. Durch diese Ausnehmung ragt die Wippe 20 bzw. die Träger 35.

Der Stempel 30 weist eine Oberflächenkontur auf, die der zu bedruckenden Fläche entspricht. Zweckmäßigerweise wählt man für den Stempel einen weichelastischen Werkstoff aus. Insbesondere Silikonkautschuk mit einer Härte kleiner 25 Shore hat sich als geeignet erwiesen.

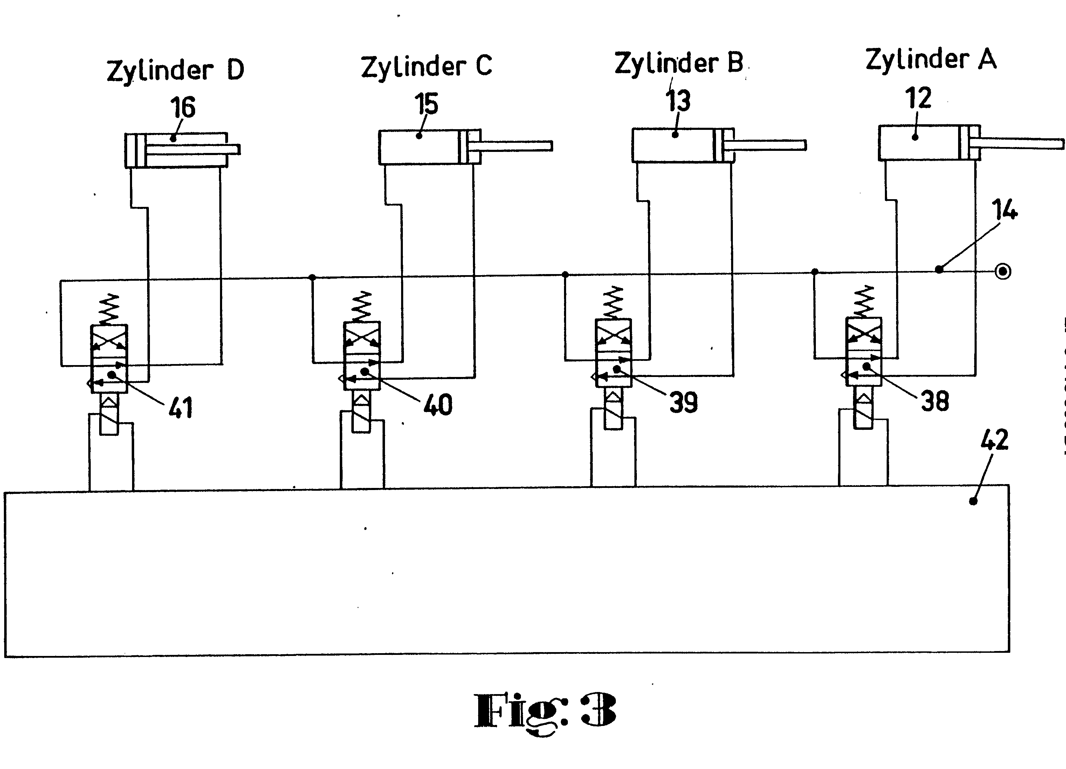

In Figur 3 ist die elektropneumatische Steuerung für die Auftragvorrichtung dargestellt. Die Erfindung ist jedoch hierauf nicht beschränkt.

Selbstverständlich wäre auch ein Ausführungsbeispiel denkbar, bei dem elektromagnetische, elektrische oder hydraulische Antriebsmittel eingesetzt sind. Insgesamt werden vier Zylinder A bis D angesteuert. Mit Druckluft versorgt werden die Zylinder durch eine Hauptleitung 14. Mit dieser Hauptleitung 14 ist über ein 4/2-Wegeventil 38 der Zylinder A verbunden. Im Ruhezustand ist die Kolbenstange in der Stellung « VOR ». Auch die Kolbenstangen der beiden anderen Zylinder B und C stehen im Ruhezustand in der Stellung « VOR ». Ferner stehen diese Zylinder mit der Hauptleitung 14 über 4/2-Wegeventile 39 bzw. 40 in Verbindung. Werden die drei Wegeventile 38, 39 und 40 durch die Steuerschaltung 42 betätigt, so werden die jeweiligen Kolbenstangen in die Stellung « ZURÜCK » geschoben. Bei dem Zylinder D ist es genau umgekehrt. Seine Kolbenstange befindet sich im Ruhezustand in der Stellung « ZURÜCK ». Über sein 4/2-Wegeventil 41 ist er mit der Steuerschaltung 42 verbunden. Die Steuerschaltung 42 ist nich näher beschrieben, da sie für die Erfindung keine Bedeutung besitzt.

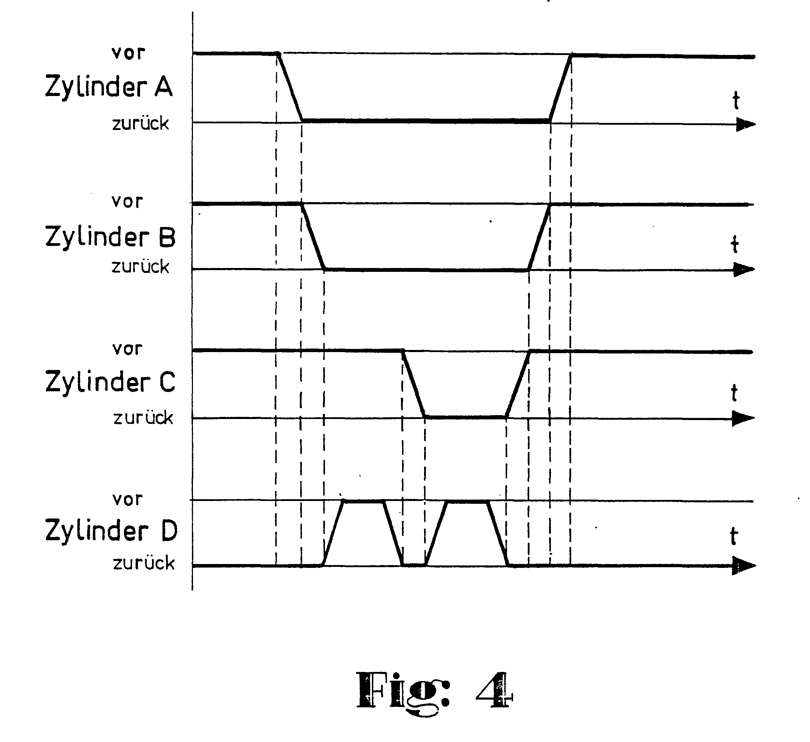

Anhand des Funktions- und Zeitdiagrammes der Figur 4 soll nachfolgend ein Zyklus beschrieben werden.

Im Ruhezustand ist die Kolbenstange des Zylinders A ausgefahren, so daß das Hebeglied 8 in das Flußmittel 45 eingetaucht ist. Dies ist deshalb von Bedeutung, da die Gaze so nicht verschmutzen oder verkleben kann. Außerdem sind die Kolbenstangen 52 und 53 der beiden Zylinder B und C ausgefahren, so daß sich der Stempel in einer rückwärtigen 1. Stellung befindet. Beginnt nun der Zyklus, so fährt zunächst die Kolbenstange des Zylinders A zurück, d. h. hoch, so daß die Gaze mit dem daran haftenden Flußmittel aus dem Vorratsbehälter herausgehoben wird. Erreicht die Kolbenstange des Zylinders A ihren Endanschlag, so schiebt sich die Kolbenstange des Zylinders B zurück. Dies bedeutet, daß der Stempel über die Gaze geschoben wird. Ist diese Stellung erreicht, so wird die Kolbenstange des Zylinders D nach vorne geschoben. Damit schiebt sich die Rolle über die Einlaufschrägen zwischen die zweiten Arme. Demzufolge bewegen sich die ersten Arme und damit die Stempel aufeinander zu. Die Stempel übernehmen nun das Flußmittel von der Gaze. Nach einer bestimmten Zeit schiebt sich die Kolbenstange des Zylinders D wieder zurück, womit sich auch die ersten Arme des Stempels wieder öffnen. Sobald dies geschehen ist, geht die Kolbenstange des Zylinders C zurück. Damit schiebt sich der gesamte Schlitten und mit ihm die Stempel nach vorne über die Leiterplatte. Ist diese Abgabeposition erreicht, so schiebt sich die Kolbenstange des Zylinders D erneut nach vorne, so daß durch die Rolle die beiden Stempel wieder aufeinander zu bewegt werden. Die Stempel geben somit das anhaftende Flußmittel auf die Leiterplatte über. Nach einer bestimmten Zeit öffnen sich die Arme, indem die Kolbenstange des Zylinders D wieder zurückfährt. Sind die Arme offen, so fahren auch die Kolbenstangen der Zylinder B und C gleichzeitig oder zeitlich nacheinander wieder in die Stellung « VOR ». Dies bedeutet, daß der Schlitten wieder zurück in die Ruheposition geht. Ist diese Position erreicht, so fährt die Kolbenstange des Zylinders A wieder nach vorne, so daß die Gaze in den Vorratsbehälter eintauchen kann.

Bezugszeichenliste

1 Gestelltisch
2 Leiterplatte
3 Tragkörper
4 Seitenwand
5 Halteplatte
6 Vorratsbehälter
7 Abdeckplatte
8 Hebeglied
9 Stempeleinrichtung
10 Grundplatte
11 Schlitten
12 Zylinder A
13 Zylinder B
14 Hauptleitung
15 Zylinder C

16 Zylinder D
17 Ausnehmung
18 Tragplatte
19 Winkelstück
20 Führungsbuchsen
21 Schalter
22 Schalter
23 Führungsstangen
24 Leiste
25 Ansatz
26 Haltearme
27 Gaze
28 Wippe
29 erster Arm
30 Stempel
31 Federglied
32 zweiter Arm
33 Einlaufschräge
34 Rolle
35 Träger
36 Schalter
37 Schalter
38 4/2-Wegeventil
·39 4/2-Wegeventil
40 4/2-Wegeventil
41 4/2-Wegeventil
42 Steuerschaltung
43 Schalter
44 Schaltstück
45 Flußmittel
46 Schlitz
47 Druckluftleitung
48 Bügel
49 Führungssäule
50 Lagerbock
51 Einschnitt
52 Kolbenstange des Zylinders B
53 Kolbenstange des Zylinders C
54 Gelenkkopf
55 Brückenelement
56 Kolbenstange des Zylinders D

**Patentansprüche**

1. Automatische Auftragvorrichtung für ein flüssiges oder pastöses Beschichtungsmaterial (45)
mit einem Tragkörper (3)
mit einem am Tragkörper (3) befestigten Vorratsbehälter (6) für das Beschichtungsmaterial (45) und
mit einem positionierten Substrat (2), auf das das Beschichtungsmaterial (45) in bestimmten flächigen Bereichen aufbringbar ist,
mit einem in das flüssige oder pastöse Beschichtungsmaterial (45) eintauch- und herausfahrbaren, eine bestimmte Teilmenge des Beschichtungsmaterials (45) durch Benetzung aufnehmenden Glied (8) und
mit einer zum Glied (8) bewegbaren Übernahmeeinrichtung (9), die das aus dem Vorratsbehälter (6) entnommene Beschichtungsmaterial (45) übernimmt und auf das Substrat (2) aufträgt, dadurch gekennzeichnet, daß das Beschichtungsmaterial (45) aufnehmende Glied ein Hebeglied (8) und die Übernahmeeinrichtung eine Stempeleinrichtung (9) darstellen und die Übernahme des Beschichtungsmaterials (45) im herausgefahrenen Zustand des Hebegliedes (8) stattfindet.

2. Automatische Auftragvorrichtung nach Anspruch 1, dadurch gekennzeichnet, daß der längliche Tragkörper (3) im Querschnitt U-förmig ausgebildet ist mit einer an einem Bearbeitungsautomaten befestigten Grundplatte (10), zwei Seitenwänden (4) und einer senkrecht zu den Seitenwänden angeordneten Halteplatte (5).

3. Automatische Auftragvorrichtung nach Anspruch 2, dadurch gekennzeichnet, daß im Tragkörper (3) ein Schlitten (11) geführt ist, der mittels pneumatisch gesteuerter Zylinder (13, 15) in mehrere Vorschubrichtungen verstellbar ist.

4. Automatische Auftragvorrichtung nach Anspruch 3, dadurch gekennzeichnet, daß der Schlitten (11) die Stempeleinrichtungen (19) trägt.

5. Automatische Auftragvorrichtung nach Anspruch 3, dadurch gekennzeichnet, daß zwei Zylinder (13, 15) vorhanden sind, wobei die Kolbenstange (52) des ersten Zylinders (13) fest mit der Halteplatte (5), daß die Kolbenstange (53) des zweiten Zylinders (15) fest mit dem Schlitten (11) und daß beide Gehäuse der Zylinder (13, 15) fest miteinander verbunden sind.

6. Automatische Auftragvorrichtung nach Anspruch 1, dadurch gekennzeichnet, daß die Stempeleinrichtung (9) aus mindestens einer zweiarmigen, um ein Drehlager winkelbewegbar gelagerten Wippe (28) besteht, deren den Stempel (30) tragender erster Arm (29) von einem Federglied (31) beaufschlagt ist und deren zweiter Arm (32) mit einem von einem pneumatisch gesteuerten Zylinder (16) angetriebenen Betätigungsglied (34) in Wirkverbindung steht.

7. Automatische Auftragvorrichtung nach Anspruch 6, dadurch gekennzeichnet, daß zwei gegensinnig winkelbewegbar gelagerte Wippen (28) vorgesehen sind, wobei die zweiten Arme (32) Einlaufschrägen (33) für das Betätigungsglied (34) aufweisen.

8. Automatische Auftragvorrichtung nach Anspruch 6 und 7, dadurch gekennzeichnet, daß das Betätigungsglied eine drehbare Rolle (34) ist.

9. Automatische Auftragvorrichtung nach Anspruch 6 und 7, dadurch gekennzeichnet, daß die Stempel (30) über zungenartige Träger (35) mit den ersten Armen (29) verbunden sind.

10. Automatische Auftragvorrichtung nach einem der Ansprüche 6 bis 9, dadurch gekennzeichnet, daß die Stempel (30) eine der zu druckenden Fläche entsprechende Überflächenkontur aufweisen und aus einem weichelastischen Werkstoff, wie z. B. Silikonkautschuk, mit einer Härte kleiner 25 Shore hergestellt sind.

11. Automatische Auftragvorrichtung nach Anspruch 1, dadurch gekennzeichnet, daß der Vorratsbehälter (6) durch eine Abdeckplatte (7) teilweise abgedeckt ist.

12. Automatische Auftragvorrichtung nach Anspruch 1 und 2, dadurch gekennzeichnet, daß die Stempeleinrichtung (9) eine Ausnehmung (17) in der Halteplatte (5) durchsetzt.

13. Automatische Auftragvorrichtung nach Anspruch 2, dadurch gekennzeichnet, daß die Halteplatte (5) eine endseitig, im rechten Winkel zur Halteplatte (5) stehende Tragplatte (18) besitzt, auf der ein pneumatisch gesteuerter Antriebszylinder (12) ein Winkelstück (19) und Führungsbuchsen (20) befestigt sind.

14. Automatische Auftragvorrichtung nach Anspruch 13, dadurch gekennzeichnet, daß das Winkelstück (19) zwei beabstandet angeordnete Schalter (21, 22) aufweist, wobei deren Abstand dem Hub des Hebegliedes entspricht.

15. Automatische Auftragvorrichtung nach Anspruch 13 und 14, dadurch gekennzeichnet, daß in den Führungsbuchsen (20) die Führungsstangen (23) des Hebegliedes geführt sind.

16. Automatische Auftragvorrichtung nach Anspruch 14 und 15, dadurch gekennzeichnet, daß die Enden der beiden Führungsstangen (23) verbindende Leiste (24) einen seitlichen Ansatz (25) zur Betätigung der Schalter (21, 22) besitzt.

17. Automatische Auftragvorrichtung nach Anspruch 1, dadurch gekennzeichnet, daß der in das flüssige oder pastöse Beschichtungsmaterial (45) eintauchbare Teil des Hebegliedes (8) aus zwei beabstandeten Haltearmen (26) besteht, zwischen deren freien Enden eine Gaze (27) eingespannt ist derart, daß die Gazeebene parallel zur Oberfläche des Beschichtungsmaterials (45) liegt.

## Claims

1. An automatic coating machine for a liquid or pasty coating material (45)
with a supporting structure (3)
with a storage container (6) for the coating material (45) attached to the supporting structure (3) and
with a positioned substrate (2), on which the coating material (45) is applied in certain plane areas,
with an element (8) to dip in and pull out of the liquid or pasty coating material (45), taking up a certain quantity of the coating material (45) through wetting, and
with a to the element (8) movable device for takeover (9), which takes over the coating material (45) from the storage container (6) and applies it onto the substrate (2),
characterized in that the element taking up coating material (45) is a lifting element (8) and the device for take-over a molding device (9), with the take-over of the coating material (45) taking place when the lifting element (8) is driven out.

2. An automatic coating machine according to claim 1, characterized in that the oblong supporting structure (3) in its cross section is U-shaped, with a base plate (10) mounted to an automatic machine, two side walls (4) and a supporting plate (5) perpendicular to the side walls.

3. An automatic coating machine according to claim 2, characterized in that a sledge (11) is guided in the supporting structure (3), adjustable to several advance directions by means of pneumatically controlled cylinders (13, 15).

4. An automatic coating machine according to claim 3, characterized in that the sledge (11) carries the molding devices (19).

5. An automatic coating machine according to claim 3, characterized in that there are two cylinders (13, 15), the piston rod (52) of the first cylinder (13) being firmly attached to the supporting plate (5), the piston rod (53) of the second cylinder (15) being firmly attached to the sledge (11) as well as both casings of the cylinders (13, 15) being firmly attached to each other.

6. An automatic coating machine according to claim 1, characterized in that the molding device (9) consists of at least a double-armed rocker (28), angle-movable around a pivot bearing, the first arm (29) of the rocker supporting the mold (30) being mounted with a spring element (31), the second arm (32) being efficiency-connected with an operating element (34) driven by a pneumatically controlled cylinder (16).

7. An automatic coating machine according to claim 6, characterized in that it is provided with two rockers (28), angle-movable on the bearings in opposite direction, the second arms (32) having inlet pitches (33) for the operating element (34).

8. An automatic coating machine according to claims 6 and 7, characterized in that the operating element (34) is a revolving roller (34).

9. An automatic coating machine according to claims 6 and 7, characterized in that the molds (30) are attached to the first arms (29) through tongue-shaped supports (35).

10. An automatic coating machine according to anyone of the claims 6 to 9, characterized in that the molds (30) have upper surface contours, adequate to the surface to be molded, and are made of a flexible material, such as silicon caoutchouc, with a hardness of less than 25 Shore.

11. An automatic coating machine according to claim 1, characterized in that the storage container (6) is partly covered with a covering plate (7).

12. An automatic coating machine according to claims 1 and 2, characterized in that the molding device (9) intersperses a recess (17) in the supporting plate (5).

13. An automatic coating machine according to claim 2, characterized in that the supporting plate (5) has a base plate (18), at right angles to and with the end towards the supporting plate (5), with a pneumatically controlled driving cylinder (12), a bend (19) and guide bushes (20) attached to the base plate (18).

14. An automatic coating machine according to claim 13, characterized in that the bend (19) has two spaced switches (21, 22), the space between the switches being adequate to the stroke of the lifting element.

15. An automatic coating machine according to claims 13 and 14, characterized in that the motion rods (23) of the lifting element are guided by the guide bushes (20).

16. An automatic coating machine according to claims 14 and 15, characterized in that the strip (24), linking the ends of both motion rods (23), has a side nose (25) for the control of the switches (21, 22).

17. An automatic coating machine according to claim 1, characterized in that the part of the lifting element (8) to dip into the liquid or pasty coating material (45) consists of two spaced supporting arms (26), between the two free ends of which a gaze (27) is gripped in the way that the gaze level lies parallel to the upper surface of the coating material (45).

**Revendications**

1. Dispositif d'application pour une matière de revêtement liquide ou pâteuse (45)

avec une enveloppe (3) avec un réservoir de stockage (6) fixé à l'enveloppe (3) pour la matière de revêtement (45) et

avec un substrat positionné (2) sur lequel on peut appliquer la matière de revêtement (46) dans certaines zones en nappes,

avec un élément (8) destiné à être immergé dans et ressorti de la matière de revêtement liquide ou pâteuse (45) en pouvant absorber une certaine quantité de cette matière de revêtement (45) moyennant le mouillage et

avec un dispositif de réception (9) qu'on peut diriger jusqu'à l'élément (8) et qui reçoit la matière de revêtement (45) du réservoir de stockage (6) et l'applique sur le substrat (2), caractérisé en ce que l'élément absorbant la matière de revêtement (45) représente un élément de levage (8) et le dispositif de réception un dispositif de timbrage (9), et que la réception de la matière de revêtement (45) a lieu avec l'élément de levage sorti (8).

2. Dispositif d'application automatique selon revendication 1, caractérisé en ce que l'enveloppe oblongue (3) présente une forme d'U dans la coupe transversale avec une plaque de fondation (10) fixée à la machine automatique d'usinage, avec deux parois latérales (4) et une platine (5) verticale par rapport aux parois latérales.

3. Dispositif d'application automatique selon revendication 2, caractérisé en ce que dans l'enveloppe (3) est guidé un glissoir (11) orientable vers plusieurs directions d'avancement moyennant des cylindres commandés de manière pneumatique (13, 15).

4. Dispositif d'application automatique selon revendication 3, caractérisé en ce que le glissoir (11) porte les dispositifs de timbrage (19).

5. Dispositif automatique d'application selon revendication 3, caractérisé en ce qu'il y a deux cylindres (13, 15), la tige de piston (52) du premier cylindre (13) est fixement reliée à la platine (5), la tige de piston (53) du deuxième cylindre (15) est fixement reliée au glissoir (11) et les deux carcasses des cylindres (13, 15) sont fixement reliées entre elles.

6. Dispositif automatique d'application selon revendication 1, caractérisé en ce que le dispositif de timbrage (9) consiste d'une bascule (28) à deux bras au moins, logée autour d'un coussinet de pivotement et ayant la possibilité de mouvement angulaire tout autour, dont le premier bras (29) portant le timbre (30) est admis d'un élément à ressort (31) et dont le deuxième bras (32) est en connexion active avec un élément de commande (34) actionné par un cylindre commandé de manière pneumatique.

7. Dispositif d'application automatique selon revendication 6, caractérisé en ce que deux bascules (28) logées en position opposée sont prévues ; les deuxièmes bras (32) ont des entrées obliques (33) pour l'élément de commande (34).

8. Dispositif d'application automatique selon revendications 6 et 7, caractérisé en ce que l'élément de commande est une poulie pivotante (34).

9. Dispositif d'application automatique selon revendications 6 et 7, caractérisé en ce que le timbre (30) est relié aux premiers bras (29) par un support sous forme de langue (35).

10. Dispositif d'application automatique selon une des revendications de 6 jusqu'à 9, caractérisé en ce que les timbres (30) ont des contours de surface correspondant à la surface à imprimer et qu'ils sont produits d'une matière souple et élastique, comme p.s. de caoutchouc silicone, avec une dureté de moins de 25 Shore.

11. Dispositif d'application automatique selon revendication 1, caractérisé en ce que le réservoir de stockage (6) est partiellement couvert d'une plaque de recouvrement (7).

12. Dispositif d'application automatique selon revendications 1 et 2, caractérisé en ce que le dispositif de timbrage (9) traverse un creux (17) dans la platine (5).

13. Dispositif d'application automatique selon revendication 2, caractérisé en ce que la platine (5) possède une plaque d'appui (18) en position rectangulaire par rapport à la platine (5) à l'extrémité de celle-ci ; sur la plaque d'appui sont fixés un cylindre de commande (12), un raccord angulaire (19) et des douilles de guidage (20).

14. Dispositif d'application automatique selon revendication 13, caractérisé en ce que le raccord angulaire (19) présente deux interrupteurs (21, 22) placés à une certaine distance l'un de l'autre dont la distance correspond à la levée de l'élément de levage.

15. Dispositif d'application automatique selon revendications 13 et 14, caractérisé en ce que les tiges conductrices (23) de l'élément de levage sont guidées dans les douilles de guidage (20).

16. Dispositif d'application automatique selon revendications 14 et 15, caractérisé en ce que la barre (24) reliant les extrémités des deux tiges conductrices (23) a une saillie latérale (25) pour l'actionnement des interrupteurs (21, 22).

17. Dispositif d'application automatique selon revendication 1, caractérisé en ce que la partie de l'élément de levage (8) appropriée à l'immersion dans la matière liquide ou pâteuse (45) consiste en deux bras de support (26) situés à distance entre les extrémités libres desquels une gaze (27) est serrée de sorte que la surface de la gaze est parallèle à celle de la matière de revêtement (45).

Fig. 1

**Fig. 2**

Zylinder D     Zylinder C     Zylinder B     Zylinder A

16        15        13        12

14

41        40        39        38

42

EP 0 145 900 B1

**Fig. 3**

vor
Zylinder A
zurück

t

vor
Zylinder B
zurück

t

vor
Zylinder C
zurück

t

vor
Zylinder D
zurück

t

Fig: 4